# EUROPÄISCHE PATENTSCHRIFT

(11) **EP 1 252 451 B1**
(45) Veröffentlichungstag und Bekanntmachung des Hinweises auf die Patenterteilung: **12.09.2007**
(21) Anmeldenummer: 01900130.4
(22) Anmeldetag: 08.01.2001
(51) Int. Cl.: F16D 1/076

(54) **VORRICHTUNG ZUR KUPPLUNG ZWEIER WERKZEUGTEILE**
DEVICE FOR CONNECTING TWO TOOL PARTS
DISPOSITIF DE COUPLAGE DE DEUX PIECES D'OUTIL

(30) Priorität: 04.02.2000 DE 10004895
(43) Veröffentlichungstag der Anmeldung: 30.10.2002
(73) Patentinhaber: KOMET GROUP Holding GmbH, 74354 Besigheim (DE)
(72) Erfinder: BAXIVANELIS, Konstantin, 86916 Kaufering (DE); ROTHENSTEIN, Achim, 70736 Fellbach (DE)
(74) Vertreter: Wolf, Eckhard
(86) Internationale Anmeldenummer: PCT/EP2001/000098
(87) Internationale Veröffentlichungsnummer: WO 2001/057410

(56) Entgegenhaltungen:
- DE-A- 4 400 425
- DE-A- 19 724 030
- GB-A- 942 071

## Beschreibung

Die Erfindung betrifft eine Vorrichtung zur lösbaren Kupplung zweier innerhalb eines drehenden werkzeugs koaxial ausgerichteter Werkzeugteile, die an einander zugewandten Trennflächen mittels einer Spanneinrichtung axial gegeneinander preßbar sind.

Die erfindungsgemäße Vorrichtung ist sowohl zur lösbaren Kupplung von Werkzeugen mit einer Maschinenspindel (Schnittstelle) als auch zur Verbindung von Werkzeugteilen untereinander (Trennstelle) bestimmt. Unter "Werkzeugteilen" sollen insbesondere Bohrstangen, Verlängerung- und Reduzierstücke, Verstellköpfe, Spindelvorsatzflansche und Maschinenspindeln verstanden werden.

Beim Einsatz von Bohrwerkzeugen mit Wendeschneidplatten tritt häufig eine nicht zu akzeptierende Geräuschemission auf. Hiervon betroffen sind vor allem Werkzeugteile mit einer Planfächenverspannung. Zu der Geräuschbildung kommt es durch eine Schwingungsanregung des Mehrkörpersystems "Werkzeug-Spannfutter-Maschine" aufgrund dynamischer Zerspanungskräfte. Das Mehrkörpersystem wird durch periodische oder impulsartige Bearbeitungskräfte breitbandig angeregt. Dieses aus der Spanbildung resultierende Anregungsspektrum führt zu einem Aufschwingen des Werkzeugs. Dabei treten vor allem selbsterregte Torsions- und Biegeschwingungen auf. Es kommt dabei zu Mikrobewegungen im Fügespalt zwischen den Werkzeugteilen und damit zu einem abwechselnden Aufziehen und Losbrechen der Werkzeugteile nach dem Haft-Gleit-Effekt (Stick-Slip-Effekt) und damit zu unerwünschten Körperschallemissionen im hochfrequenten Bereich. Dabei ist zu berücksichtigen, daß die Geräuschbildung beim Bearbeitungsvorgang einhergeht mit Mikrobewegungen, die zu unerwünschten Rattermarken im Werkstück führen können. Um diesen Nachteil zu vermeiden, wurde bereits vorgeschlagen (DE-A 44 00 425), daß die Werkzeugteile an ihren Trennflächen unter Zwischenklemmen einer elastomeren Materialbrücke axial voneinander getrennt und unter elastischer Verformung der Materialbrücke begrenzt gegeneinander verdrehbar sind. Ein wesentlicher Nachteil dieser Konstruktion besteht darin, daß die Materialbrücke axial verformbar ist, so daß die erzielbare Bearbeitungsgenauigkeit zu wünschen übrig läßt. Hinzu kommt, daß die Materialbrücke eine Radialauslenkung des Werkzeugs ermöglicht, die vor allem bei langen Werkzeugen zu nicht tolerierbaren Bearbeitungsfehlem führen kann.

Ausgehend hiervon liegt der Erfindung die Aufgabe zugrunde, eine Kupplungsvorrichtung der eingangs angegebenen Art zu entwickeln, die zu einer Schwingungsdämpfung und damit zu einer Reduzierung der Geräuschemission beim Arbeitsvorgang führt und zugleich eine hohe Bearbeitungsgenauigkeit gewährleistet.

Zur Lösung dieser Aufgabe werden die in den Ansprüchen 1 und 13 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, daß neben einer torsionsweichen Anbindung der Werkzeugteile im Bereich der Kupplungsvorrichtung zusätzlich eine axiale Aussteifung vorgesehen ist. Erst damit kann den hohen Anforderungen an die Bearbeitungsgenauigkeit entsprochen werden. Um dies zu erreichen, wird gemäß einer ersten Lösungsalternative vorgeschlagen, daß zumindest eine der Trennflächen der miteinander verspannten Werkzeugteile in mehrere, in Umfangsrichtung einen Abstand voneinander aufweisende, axialsteife und torsionsweiche Auflagesegmente unterteilt ist.

Eine bevorzugte Ausgestaltung der Erfindung sieht vor, daß mindestens eines der Werkzeugteile mehrere in Umfangsrichtung einen Abstand voneinander aufweisende, zur betreffenden Trennfläche hin axial offene, im wesentlichen radial verlaufende Nuten aufweist, deren durch ihre Flanken begrenzten Trennwände die Auflagesegmente bilden. Die Trennflächen können dabei in mehrere Umfangspartien unterteilt werden, von denen zwei vorzugsweise einander diametral gegenüberliegende Umfangspartien in Auflagesegmente unterteilt sind, während die anderen, geschlossenen Umfangspartien gegenüber den Auflagesegmenten axial zurückversetzt sind. Mit diesen Maßnahme ist sichergestellt, daß es im Bereich der geschlossenen Umfangspartien, die keine Biegefähigkeit besitzen und daher nicht torsionsweich sind, zu keiner Geräuschbildung kommen kann. Die Nuten zwischen den Auflagesegmenten können mit einem verformbaren, vorzugsweise elastomeren Material ausgefüllt werden.

Eine weitere vorteilhafte Ausgestaltung der Erfindung sieht vor, daß die Nuten mit in radialer Richtung konstanter Weite eingebracht sind, so daß die Trennwände eine radial von außen nach innen abnehmende Wandstärke aufweisen. Die Trennwände sind dabei als an ihrem Fußpunkt mit dem betreffenden Werkzeugteil einstückig verbundene Biegebalken ausgebildet. Um auch bei relativ dicken Trennwänden eine in Umfangsrichtung weiche Anbindung zu verhalten, ist die Wandstärke der Trennwände vorzugsweise im Bereich ihres Fußpunkts geschwächt.

Die gegeneinander verspannbaren Trennflächen sind zweckmäßig planparallel oder komplementär konisch ausgebildet.

Die Erfindung läßt sich mit Vorteil einsetzen, wenn eines der Werkzeugteile einen zylindrischen oder kegeligen Paßzapfen sowie eine den Paßzapfen ringförmig umgebende, die Trennfläche bildende Ringfläche aufweist und wenn an dem anderen Werkzeugteil eine zylindrische Paßbohrung zur Aufnahme des Paßzapfens und eine die Paßbohrung an deren Rand umgebende, die andere Trennfläche bildende Stirnfläche vorgesehen ist. Die axialsteifen und torsionsweichen Auflagesegmente sind hierbei zweckmäßig an dem die Paßbohrung aufweisenden Werkzeugteil angeordnet, wobei die Radialnuten axial zur Stirnfläche und radial nach außen und zur Paßbohrung hin offen sind. Vorteilhafterweise ist bei einer solchen Kupplungsvorrichtung ein Klemmbolzen vorgesehen, der in einer Querbohrung des Paßzapfens verschiebbar angeordnet ist und an seinen Enden einen Innen- oder Außenkonus aufweist. Weiter sind dort zwei einander bezüglich der Paßbohrung diametral gegenüberliegende, einen nach dem Inneren der Paßbohrung weisenden Außen- bzw. Innenkonus aufweisende, beim Spannvorgang unter gegenseitigem Anpressen der Werkzeugteile im Bereich der Trennflächen keilartig mit dem Klemmbolzen verspannbare Spannorgane vorgesehen. Bei dieser Konstruktion ist es von Vorteil, wenn die Trennfläche des die Paßbohrung aufweisenden Werkzeugteils außerhalb der die Spannorgane enthaltenden Umfangspartien in die Auflagesegmente unterteilt und in den die Spannorgane enthaltenden Umfangspartien geschlossen und axial gegenüber den Auflagesegmenten zurückversetzt ist.

Eine weitere vorteilhafte oder alternative Ausgestaltung der Erfindung sieht vor, daß die Werkzeugteile an ihren Trennflächen unter Zwischenklemmen einer ringförmigen, axialsteifen und torsionsweichen Materialbrücke gegeneinander preßbar sind.

Die Materialbrücke ist dabei zweckmäßig an ihrer einen Stirnfläche geschlossen und an ihrer anderen Stirnfläche in mehrere, in Umfangsrichtung einen Abstand voneinander aufweisende, axialsteife und torsionsweiche Auflagesegmente unterteilt. Grundsätzlich ist es dabei möglich, die Axialstege durch ein vorzugsweise elastomeres Bindemittel miteinander zu verbinden.

Alternativ hierzu kann die Materialbrücke mit zwei die jeweiligen Stirnflächen begrenzenden geschlossenen Ringpartien versehen sein, die durch eine Vielzahl von in Umfangsrichtung im Abstand voneinander angeordnete, radial durchgehende Axialstege axialsteif und torsionsweich miteinander verbunden sind. Die Stegzwischenräume können hierbei beispielsweise ein rechteckige, trapezförmige, kreisförmige oder ovale Querschnittsöffnung bilden. Eine weitere Ausführungsvariante sieht vor, daß die Materialbrücke an ihren beiden Stirnflächen in mehrere, in Umfangsrichtung einen Abstand voneinander aufweisende, von den beiden Stirnseiten her mäander- oder zickzackartig ineinandergreifende axialsteife und torsionsweiche Auflagesegmente unterteilt ist. Die Materialbrücke kann auch aus einer Vielzahl von in Umfangsrichtung einen Abstand voneinander aufweisenden radial durchgehenden axialsteifen Stegen bestehen, die durch ein vorzugsweise elastomeres Bindemittel torsionsweich miteinander verbunden sind.

Gemäß einer vorteilhaften Ausgestaltung der Erfindung ist die Materialbrükke stoffschlüssig im Bereich der Trennfläche mit einem der Werkzeugteile verbunden.

Im folgenden wird die Erfindung anhand einiger in der Zeichnung in schematischer Weise dargestellten Ausführungsbeispiele näher erläutert. Es zeigen
- Fig. 1a: eine schaubildliche Darstellung zweier miteinander gekuppelter Werkzeugteile In Form eines Bohrwerkzeugs mit Adapterstück;
- Fig 1b: eine Seitenansicht des Bohrwerkzeugs nach Fig. 1a ohne Kupplungsstück;
- Fig. 2a bis 2d: Adapterstücke mit verschieden gestalteten Dämpfungspartien in schaubildlicher Darstellung;
- Fig.3: eine als Dämpfungsglied ausgebildete Materialbrücke in schaubildlicher Darstellung;
- Fig. 4a bis 4f: ausschnittsweise Schnittdarstellungen durch eine schwingungsdämpfende Materialbrücke entsprechend Fig. 3 mit sechs verschieden gestalteten Dämpfungspartien.

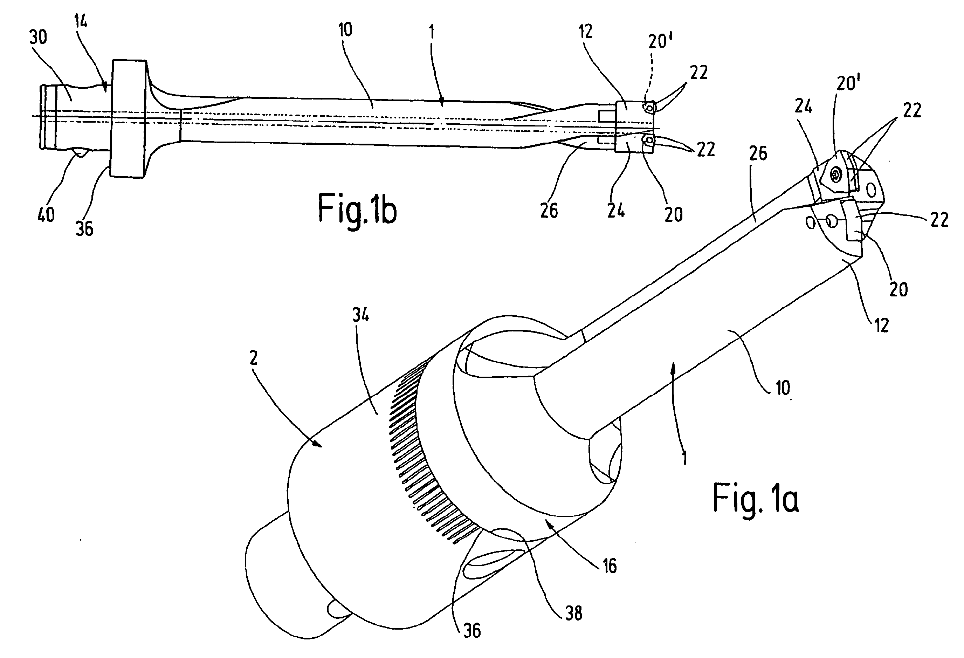

Das in Fig. 1a und 1b dargestellte Bohrwerkzeug besteht im wesentlichen aus einem Schaft 10, einer stirnseitig am Schaft 10 angeordneten Bohrkrone 12 und einem an dem der Bohrkrone 12 gegenüberliegenden Ende des Schafts 10 angeordneten Kupplungsorgan 14 einer Kupplungsvorrichtung 16.

Die Bohrkrone 12 weist bei dem gezeigten Ausführungsbeispiel zwei in verschiedenen radialen Abständen von der Schaftachse angeordnete sechsekkige Wendeschneidplatten 20,20' auf, deren wirksame Schneidkanten 22 sich in ihren Arbeitsbereichen radial teilweise überdecken. Die Wendeschneidplatten sind in Aussparungen einer achsparallelen Flanke eines Spankanals 24 angeordnet, der an seinem rückwärtigen Ende in eine Spannut 26 des Schafts 10 mündet. Die Kupplungsvorrichtung 16 besteht im wesentlichen aus dem am rückwärtigen Ende des Bohrwerkzeugs 1 axial überstehenden Paßzapfen 30, einer an einem Adapterstück 2 oder an einer Maschinenspindel axial überstehenden, eine Paßbohrung 32 aufweisenden Anschlußhülse 34 und einem Spannmechanismus zum Einziehen des Paßzapfens 30 in die Paßbohrung 32 der Anschlußhülse 34 sowie zur Erzeugung einer Planflächenverspannung zwischen der den Paßzapfen 30 umgebenden ringförmigen Trennfläche 36 des Bohrwerkeugs 1 und einer ringförmigen Trennfläche 38 des Adapterstücks 2. Der Spannmechanismus besteht bei den in der Zeichnung dargestellten ABS-Kupplungen (ABS = registrierte Marke der Firma Komet) aus einem in einer Querbohrung des Paßzapfens 30 verschiebbar angeordneten Klemmbolzen 40 sowie zwei in Innengewinden 42,44 der Anschlußhülse 34 geführten, einander diametral gegenüberliegenden, nicht dargestellten Halteschrauben. Der Klemmbolzen 40 greift mit seinem Außenkonus in einen Innenkonus der benachbarten Halteschraube ein und weist an seinem dem Außenkonus gegenüberilegenden Ende einen Innenkonus zur Aufnahme eines an der anderen Halteschraube angeformten Außenkonus auf. Zur Herstellung der Verbindung zwischen den beiden Werkzeugteilen 1,2 wird eine der Halteschrauben unter Zwischenklemmen des Klemmbolzens 40 gegen die andere Halteschraube gedreht Die dabei eingeleiteten Spannkräfte werden über die konischen Anlageflächen aufgrund eines vorhandenen Achsversatzes in eine den Paßzapfen 30 in die Paßbohrung 32 einziehende Bewegung umgesetzt. Beim weiteren Anziehen der betreffenden Halteschraube kommt es zu einer Planflächenverspannung zwischen den Trennflächen 36 und 38 und damit zu einer Anbindung des Bohrwerkzeugs 1 an das Adapterstück 2. Wird nun zur Ausführung eines Bohrvorgangs das Adapterstück 2 über eine Maschinenspindel in Drehung versetzt, so dringen die Wendeschneidplatten 20,20' in das Werkstück unter Erzeugung der Bohrung ein. Dabei kommt es zu Torsionsschwingungen im Bohrwerkzeug 1, die im Falle einer Relativbewegung im Bereich der Trennflächen zu einem Stick-Slip-Effekt und zur Bildung schriller Geräusche mit hohem Geräuschpegel führen können.

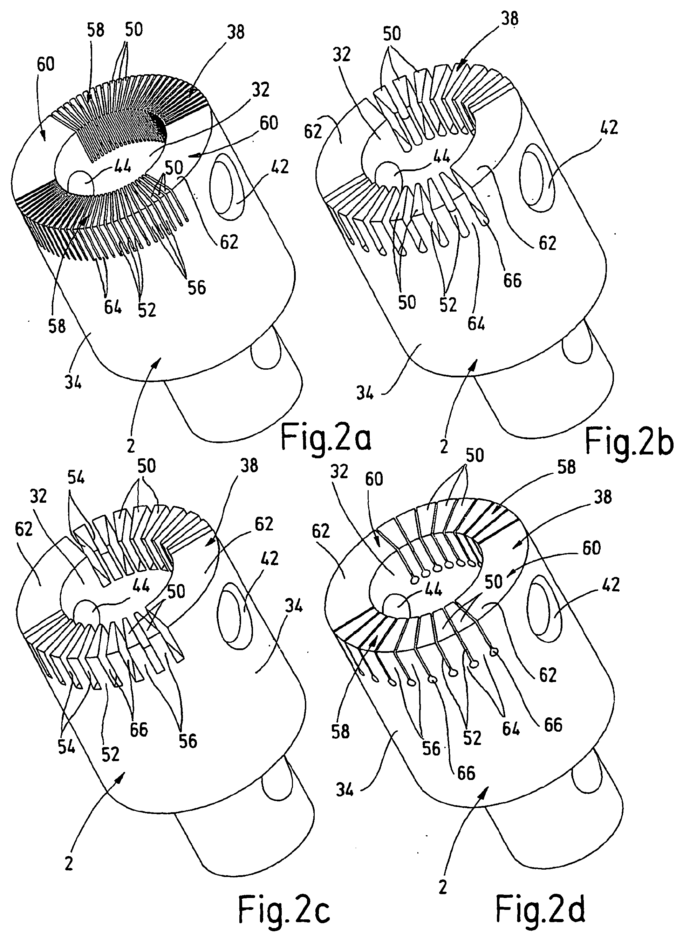

Zur Reduzierung der Geräuschbildung werden bei den gezeigten Ausführungsbeispielen Dämpfungsmaßnahmen unter Herstellung einer torsionsweichen Anbindung des Bohrwerkzeugs 1 an die Maschinenspindel 2 getroffen. Bei den Ausführungsvarianten nach Fig. 1 und 2 ist die Trennfläche 38 der Anschlußhülse 34 in mehrere, In Umfangsrichtung einen Abstand voneinander aufweisenden, axialsteife und torsionsweiche Auflagesegmente 50 unterteilt. Zu diesem Zweck sind in die Anschlußhülse 34 mehrere in Umfangsrichtung einen Abstand voneinander aufweisende, zur Trennfläche 38 hin axial offene, radial verlaufende Nuten 52 angeordnet, deren durch ihre Flanken 54 begrenzten Trennwände 56 an ihren freien Stimflächen die Auflagesegmente 50 bilden. Die Trennfläche 38 ist in vier Umfangspartien 58,60 unterteilt, von denen die beiden einander diametral gegenüberliegenden Umfangspartien 58 in die Auflagesegmente 50 unterteilt sind, während die anderen Umfangspartien 60 geschlossen und mit ihrer Stirnfläche 62 gegenüber den Auflagesegmenten 50 axial zurückversetzt sind. Die Trennwände 56 zwischen den Nuten sind als an ihrem Fußpunkt 64 mit der Anschlußhülse 34 einstückig verbundene Biegebalken ausgebildet, die eine radial von außen nach innen abnehmende Wandstärke aufweisen (vgl. Fig. 2a bis 2d). Zur Optimierung der Schwingungsdämpfung können die Weite und Tiefe der Nuten 52, die Wandstärke der Trennwände 56 und die geometrische Ausgestaltung des Nutengrundes 66 und des Fußpunkts 64 der Trennwände 56 variiert werden (Figuren 2a bis 2d). Im Falle der Fig. 2d ist der Fußpunkt 64 der Trennwände 56 geschwächt. Um die Nuten 52 gegen Schmutzzutritt zu schützen, können sie mit einem elastomeren Material ausgefüllt werden. Mit dieser Maßnahme kann zusätzlich das Schwingungsverhalten beeinflußt werden.

Die in den Figuren 1 und 2 gezeigten Ausführungsbeispiele haben den Vorteil, daß sie mit Standardwerkzeugen ohne Dämpfungsmechanismen kompatibel sind und damit einfach gegen diese ausgetauscht werden können.

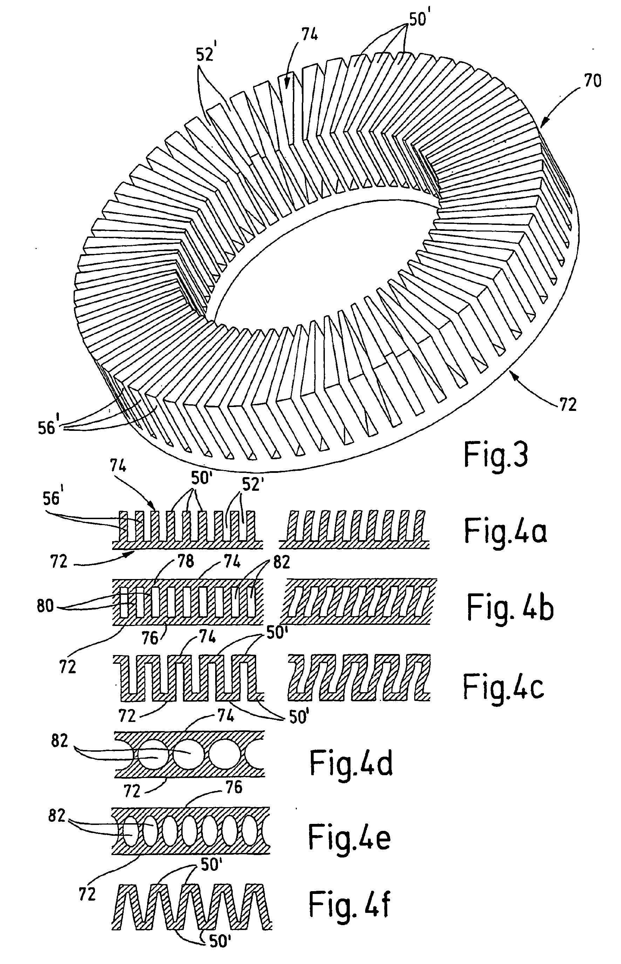

Das in Fig. 3 gezeigte Ausführungsbeispiel zeigt eine ringförmige Materialbrücke 70, die zwischen die Trennflächen 36,38 der Werkzeugteile 1,2 eingelegt und beim Spannvorgang zwischen diese eingeklemmt werden kann. Die Materialbrücke 70 ist axialsteif und in Umfangsrichtung torsionsweich ausgebildet. Sie ist zu diesem Zweck an ihrer einen Stirnfläche 72 geschlossen und an ihrer anderen Stirnfläche in eine Vielzahl von in Umfangsrichtung einen Abstand voneinander aufweisende, axialsteife und torsionsweiche Auflagesegmente 50' unterteilt. Die Auflagesegmente sind bei dem in Fig. 3 und 4a gezeigten Ausführungsbeispiel durch die Stirnflächen der Trennwände 56' gebildet, die die Radialnuten 52' voneinander trennen. In der linken Darstellung der Fig. 4a sind die Trennwände 56' im unbelasteten Zustand gezeigt. Bei Einwirkung einer In Umfangsrichtung wirkenden Torsionskraft werden die Trennwände 56' mit ihren Auflagesegmenten 50' in der in Fig. 4a rechts dargestellten Weise elastisch verformt. Durch diese Verformung wird verhindert, daß es zu einem Stick-Stip-Effekt im Bereich der Auflageflächen und damit zu einer unerwünschten Geräuschbildung kommt.

In den Schnittdarstellungen 4b bis 4f sind weitere geometrische Gestaltungsvarianten der Materialbrücke 70 dargestellt, die ebenfalls die Bedingungen einer axialsteifen und dennoch biegeweichen Ankopplung der Werkzeugteile erfüllen. Bei dem Ausführungsbeispiel nach Fig. 4b weist die Materialbrücke 70 zwei die Stirnflächen 72,74 begrenzende geschlossene Ringpartien 76,78 auf, die durch eine Vielzahl von in Umfangsrichtung im Abstand voneinander angeordnete, radial durchgehende Axialstege 80 axialsteif und torsionsweich miteinander verbunden sind. Im linken Teil der Fig. 4b ist die Materialbrücke mit unbelasteten Axialstegen 80 dargestellt, während die rechte Darstellung der Fig. 4b die Axialstege unter der Einwirkung einer Torsionskraft zeigen. Während die Zwischenräume 82 zwischen den Axialstegen 80 im Falle der Fig. 4b im Querschnitt rechteckig ausgebildet sind, sind sie bei den Ausführungsbeispielen nach Fig. 4d und 4e rund oder oval.

Bei den Ausführungsbeisplelen nach Fig. 4c und 4f sind die Materialbrücken an ihren beiden Stirnflächen 72,74 in mehrere in Umfangsrichtung einen Abstand voneinander aufweisende, von den beiden Stirnseiten her mäanderartig (Fig. 4c) oder zickzackartig (Fig. 4f) ineinandergreifende, axialsteife und torsionsweiche Auflagesegmente 50' unterteilt. Im linken Bild der Fig. 4c ist die Materialbrücke im unbelasteten Zustand gezeigt, während im rechten Bild zu erkennen ist, wie sich die Materialbrücke unter der Einwirkung einer Torsionskraft verbiegt.

Zusammenfassend ist folgendes festzuhalten: Die Erfindung bezieht sich auf eine Vorrichtung zur lösbaren Kupplung zweier innerhalb eines drehenden werkzeugs koaxial ausgerichteter Werkzeugteile 1,2, die an einander zugewandten Trennflächen 36,38 mittels einer Spannvorrichtung axial gegeneinander preßbar sind. Zur Dämpfung der beim Arbeitsvorgang auftretenden Torsionsschwingungen und zur Reduzierung der Geräuschbildung wird gemäß der Erfindung vorgeschlagen, daß zumindest eine der Trennflächen 38 in mehrere in Umfangsrichtung einen Abstand voneinander aufweisende, axialsteife und torsionsweiche Auflagesegmente 50 unterteilt ist.

## Patentansprüche

1. Vorrichtung zur lösbaren Kupplung zweier innerhalb eines drehenden Werkzeugs koaxial ausgerichteter Werkzeugteile (1,2), die an einander zugewandten Trennflächen (36,38) mittels einer Spannvorrichtung axial gegeneinander pressbar sind, **dadurch gekennzeichnet, dass** zumindest eine der Trennflächen (38) in mehrere, in Umfangsrichtung einen Abstand voneinander aufweisende, axialsteife und torsionsweiche Auflagesegmente (50) unterteilt ist.

2. Vorrichtung nach Anspruch 1, **dadurch gekennzeichnet, daß** mindestens eines der Werkzeugteile zwei in Umfangsrichtung einen Abstand voneinander aufweisende, zur betreffenden Trennfläche (38) hin axial offene, vorzugsweise radial verlaufende Nuten (52) aufweist, deren durch Ihre Flanken (54) begrenzten Trennwände (56) die Auflagesegmente (50) bilden.

3. Vorrichtung nach Anspruch 1 oder 2, **dadurch gekennzeichnet, daß** die Trennfläche (38) in mehrere Umfangspartien (58,60) unterteilt ist, von denen mindestens zwei vorzugsweise einander diametral gegenüberliegende Umfangspartien (58) in die Auflagesegmente (50) unterteilt sind, während die anderen Umfangspartien (60) geschlossen sind und mit ihren Stirnflächen (62) gegenüber den Auflagesegmenten (50) axial zurückversetzt sind.

4. Vorrichtung nach Anspruch 2 oder 3, **dadurch gekennzeichnet, daß** die Nuten (52) mit einem schwingungsdämpfenden, vorzugsweise elastomeren Material ausgefüllt sind.

5. Vorrichtung nach einem der Ansprüche 2 bis 4, **dadurch gekennzeichnet, daß** die Trennwände (56) eine radial von außen nach innen abnehmende Wandstärke aufweisen.

6. Vorrichtung nach einem der Ansprüche 2 bis 5, **dadurch gekennzeichnet, daß** die Trennwände (56) als an ihrem Fußpunkt (64) mit dem betreffenden Werkzeugteil (2) einstückig verbundene Blegebalken ausgebildet sind.

7. Vorrichtung nach einem der Ansprüche 2 bis 6, **dadurch gekennzeichnet, daß** die Wandstärke der Trennwände (56) vorzugsweise im Bereich Ihres Fußpunkts (64) geschwächt ist.

8. Vorrichtung nach einem der Ansprüche 1 bis 7, **dadurch gekennzeichnet, daß** die einander zugewandten Trennflächen (36,38) der Werkzeugteile (1,2) planparallel oder komplementär konisch ausgebildet sind.

9. Vorrichtung nach einem der Ansprüche 1 bis 8, **dadurch gekennzeichnet, daß** eines der Werkzeugteile (1) einen zylindrischen oder kegelförmigen Paßzapfen (30) sowie eine den Paßzapfen ringförmig umgebende, die eine Trennfläche (36) bildende Ringfläche aufweist, und daß das andere Werkzeugteil (2) eine zylindrische Paßbohrung (32) zur Aufnahme des Paßzapfens (30) und eine die Paßbohrung (32) an deren Rand umgebende, die andere Trennfläche (38) bildende Stirnfläche aufweist.

10. Vorrichtung nach Anspruch 9, **dadurch gekennzeichnet, daß** die Auflagesegmente (50) an dem die Paßbohrung (32) aufweisenden Werkzeugteil (2) angeordnet sind, wobei die Radialnuten (52) axial zur Stirnfläche und radial nach außen und zur Paßbohrung hin offen sind.

11. Vorrichtung nach Anspruch 9 oder 10, **gekennzeichnet durch** einen in einer Querbohrung des Paßzapfens (30) verschiebbar angeordneten, an seinen Enden einen Innen- oder Außenkonus aufweisenden Klemmbolzen (40) und zwei einander bezüglich der Paßbohrung (32) diametral gegenüberliegenden, beim Spannvorgang unter gegenseitigem Anpressen der Werkzeugteile (1,2) im Bereich der Trennflächen (36,38) keilartig mit dem Klemmbolzen (40) verspannbaren, vorzugsweise als Halteschrauben ausgebildeten Spannorganen.

12. Vorrichtung nach Anspruch 11, **dadurch gekennzeichnet, daß** die Trennfläche (38) des die Paßbohrung (32) aufweisenden Werkzeugteils (2) außerhalb der die Spannorgane enthaltenden Umfangspartien (60) in die Auflagesegmente (50) unterteilt und in den die Spannorgane enthaltenden Umfangspartien (60) geschlossen und axial gegenüber den Auflagesegmenten (50) zurückversetzt ist.

13. Vorrichtung zur lösbaren Kupplung zweier innerhalb eines drehenden Werkzeugs koaxial ausgerichteter Werkzeugteile (1,2), die an einander zugewandten Trennflächen (36,38) mittels einer Spannvorrichtung axial gegeneinander pressbar sind, **dadurch gekennzeichnet, dass** die Werkzeugteile (1,2) an ihren Trennflächen (36,38) unter Zwischenklemmten einer ringförmigen, axialsteifen, torsionsweichen Materialbrücke (70) gegeneinander pressbar sind.

14. Vorrichtung nach Anspruch 13, **dadurch gekennzeichnet, daß** die Materialbrücke (70) an ihrer einen Stirnfläche (72) geschlossen ist und an ihrer anderen Stirnfläche (74) in mehrere in Umfangsrichtung einen Abstand voneinander aufweisende, axialsteife und torsionsweiche Auflagesegmente (50') unterteilt ist.

15. Vorrichtung nach Anspruch 13, **dadurch gekennzeichnet, daß** die Materialbrücke (70) zwei die Stirnflächen (72,74) begrenzende geschlossene Ringpartien (76,78) aufweist, die durch eine Vielzahl von in Umfangsrichtung einen Abstand voneinander aufweisenden, radial durchgehenden Axialstegen (80) axialsteif und torsionsweich miteinander verbunden sind.

16. Vorrichtung nach Anspruch 15, **dadurch gekennzeichnet, daß** die Stegzwischenräume (82) eine rechteckige, trapezförmige, kreisförmig oder ovale Querschnittsöffnung bilden.

17. Vorrichtung nach Anspruch 13, **dadurch gekennzeichnet, daß** die Materialbrücke (70) an ihren beiden Stirnflächen (72,74) in mehrere in Umfangsrichtung einen Abstand voneinander aufweisende, von beiden Stirnseiten her mäanderartig oder zickzackartig ineinandergreifende, axialsteife und torsionsweiche Auflagesegmente (50) unterteilt ist.

18. Vorrichtung nach Anspruch 16 oder 17, **dadurch gekennzeichnet, daß** die Axialstege (80) durch ein vorzugsweise elastomeres Bindemittel miteinander verbunden sind.

19. Vorrichtung nach Anspruch 13, **dadurch gekennzeichnet, daß** die Materialbrücke (70) eine Vielzahl von in Umfangsrichtung einen Abstand voneinander aufweisenden, radial durchgehenden axialsteifen Axialstegen aufweist, die durch ein vorzugsweise elastomeres Bindemittel torsionsweich miteinander verbunden sind.

20. Vorrichtung nach einem der Ansprüche 13 bis 19, **dadurch gekennzeichnet, daß** die Materialbrücke (70) im Bereich einer der Trennflächen mit einem der Werkzeugteile (1, 2) stoffschlüssig verbunden ist.

21. Vorrichtung nach einem der Ansprüche 1 bis 20, **dadurch gekennzeichnet, daß** die Werkzeugteile (1, 2) insbesondere im Bereich ihrer Trennflächen mit einer reibungsmindemden Schicht versehen sind.

## Claims

1. A device for the releasable connection of two coaxially aligned tool parts (1, 2) within a rotating tool, which can be pressed axially against one another at separating surfaces (36, 38) which face one another by means of a clamping device, **characterized in that** at least one of the separating surfaces (38) is divided into several axially rigid and torsionally yieldable bearing segments (50) which are spaced from one another in peripheral direction.

2. The device according to Claim 1, **characterized in that** at least one of the tool parts has two preferably radially extending grooves (52) which are spaced from one another in peripheral direction and are axially open toward the respective separating surface (38), and the separating walls (56), which separating walls (56) are defined by their flanks (54), form the bearing segments (50).

3. The device according to Claim 1 or 2, **characterized in that** the separating surface (38) is divided into several peripheral portions (58, 60), of which at least two preferably diametrically opposite peripheral portions (58) are divided into the bearing segments (50), whereas the other peripheral portions (60) are closed and are axially set back with their faces (62) relative to the bearing segments (50).

4. The device according to Claims 2 or 3, **characterized in that** the grooves (52) are filled with an oscillation-damping, preferably elastomer material.

5. The device according to one of the Claims 2 to 4, **characterized in that** the separating walls (56) have a wall thickness decreasing radially from the outside to the inside.

6. The device according to one of the Claims 2 to 5, **characterized in that** the separating walls (56) are designed as transverse beams which are connected in one piece at their base (64) to the respective tool part (2).

7. The device according to one of the Claims 2 to 6, **characterized in that** the wall thickness of the separating walls (56) is weakened preferably in the area of their base (64).

8. The device according to one of the Claims 1 to 7, **characterized in that** the separating surfaces (36, 38) of the tool parts (1, 2), which separating surfaces face one another, are designed planar-parallel or complementarily conically.

9. The device according to one of the Claims 1 to 8, **characterized in that** one of the tool parts (1) has a cylindrical or conical fitting pin (30) and an annular surface which annularly surrounds the fitting pin and forms the one separating surface (36), and that the other tool part (2) has a cylindrical fitting bore (32) in order to receive the fitting pin (30) and a face which surrounds the fitting bore (32) at its edge and forms the other separating surface (38).

10. The device according to Claim 9, **characterized in that** the bearing segments (50) are arranged on the tool part (2) which has the fitting bore (32), whereby the radial grooves (52) are open axially toward an end face and radially outwardly and toward the fitting bore.

11. The device according to Claim 9 or 10, **characterized by** a clamping bolt (40) which is movably arranged in a transverse bore of the fitting pin (30), and has an inner or outer cone at its ends, and by two clamping members, preferably designed as clamping screws, which are diametrically opposite one another with respect to the fitting bore (32), can be clamped wedge-like to the clamping bolt (40) during the clamping operation via a reciprocal bearing pressure of the tool parts (1, 2) in the area of the separating surfaces (36, 38).

12. The device according to Claim 11, **characterized in that** the separating surface (38) of the tool part (2) which has the fitting bore (32) is divided into the bearing segments (50) outside of the peripheral portions (60) housing the clamping members, and is closed in the peripheral portions (60) housing the clamping members and is set back axially relative to the bearing segments (50).

13. The device for the reliable connection of two axially aligned tool parts (1, 2) within a rotating tool which can be pressed axially against one another at separating surfaces (36, 38) which face one another by means of a clamping device, **characterized in that** the tool parts (1, 2) can be pressed against one another at their separating surfaces (36, 38) with the inter-clamping of an annular, axially rigid, torsionally yieldable material bridge (70).

14. The device according to Claim 13, **characterized in that** the material bridge (70) is closed at its one face (72) and is divided at its other face (74) into several axially rigid and torsionally yieldable bearing segments (50'), which are spaced from one another in peripheral direction.

15. The device according to Claim 13, **characterized in that** the material bridge (70) has two closed annular portions (76, 78), which define the faces (72, 74), and which are connected axially rigid and torsionally yieldable by a plurality of radially continuous axial webs (80) which are spaced from one another in peripheral direction.

16. The device according to Claim 15, **characterized in that** the web spaces (82) form a rectangular, trapezoidal, circular or oval cross-sectional opening.

17. The device according to Claim 13, **characterized in that** the material bridge (70) is divided at its two faces (72, 74) into several axially rigid and torsionally yieldable bearing segments (50) which are spaced from one another in peripheral direction, and engage one another meander-like or zigzag-like from both faces.

18. The device according to Claim 16 or 17, **characterized in that** the axial webs (80) are connected by a preferably elastomer binding means.

19. The device according to Claim 13, **characterized in that** the material bridge (70) has a plurality of radially continuous axially rigid axial webs which are spaced from one another in peripheral direction, and which are connected torsionally yieldable by a preferably elastomer binding means.

20. The device according to one of the Claims 13 to 19, **characterized in that** the material bridge (70) is materially joined to one of the tool parts (1, 2) in the area of one of the separating surfaces.

21. The device according to one of the Claims 1 to 20, **characterized in that** the tool parts (1, 2) have a friction-reducing coat in particular in the area of their separating surfaces.

## Revendications

1. Dispositif d'accouplement dissociable de deux parties d'outillage (1, 2) orientées coaxialement à l'intérieur d'un outil tournant et pouvant être pressées axialement l'une contre l'autre, au moyen d'un dispositif de serrage, sur des surfaces de séparation (36, 38) tournées l'une vers l'autre, **caractérisé par le fait qu'**au moins l'une (38) desdites surfaces de séparation est scindée en plusieurs segments de contact (50) cédant à la torsion, doués de rigidité axiale et espacés les uns des autres dans la direction périphérique.

2. Dispositif selon la revendication 1, **caractérisé par le fait qu'**au moins l'une des parties d'outillage comporte deux entailles (52) s'étendant de préférence dans le sens radial, ouvertes axialement en direction de la surface de séparation considérée (38), distantes l'une de l'autre dans la direction périphérique et dont les cloisons séparatrices (56), délimitées par leurs flancs (54), matérialisent les segments de contact (50).

3. Dispositif selon la revendication 1 ou 2, **caractérisé par le fait que** la surface de séparation (38) est scindée en plusieurs parties périphériques (58, 60) parmi lesquelles au moins deux parties périphériques (58), de préférence diamétralement opposées l'une à l'autre, sont subdivisées en les segments de contact (50), tandis que les autres parties périphériques (60) sont fermées et sont axialement en retrait, par leurs faces extrêmes (62), vis-à-vis desdits segments de contact (50).

4. Dispositif selon la revendication 2 ou 3, **caractérisé par le fait que** les entailles (52) sont comblées d'un matériau de préférence élastomère, amortissant les vibrations.

5. Dispositif selon l'une des revendications 2 à 4, **caractérisé par le fait que** les cloisons séparatrices (56) présentent une épaisseur de paroi décroissant radialement de l'extérieur vers l'intérieur.

6. Dispositif selon l'une des revendications 2 à 5, **caractérisé par le fait que** les cloisons séparatrice (56) sont réalisées sous la forme de lamelles flexibles reliées d'un seul tenant, par leur point d'origine (64), à la partie d'outillage considérée (2).

7. Dispositif selon l'une des revendications 2 à 6, **caractérisé par le fait que** l'épaisseur de paroi des cloisons séparatrices (56) est, de préférence, affaiblie dans la région de leur point d'origine (64).

8. Dispositif selon l'une des revendications 1 à 7, **caractérisé par le fait que** les surfaces de séparation (36, 38) des parties d'outillage (1, 2), tournées l'une vers l'autre, sont réalisées avec plans parallèles ou avec complémentarité tronconique.

9. Dispositif selon l'une des revendications 1 à 8, **caractérisé par le fait que** l'une (1) des parties d'outillage comprend un tenon d'ajustement (30) cylindrique ou tronconique, ainsi qu'une surface annulaire qui entoure annulairement ledit tenon d'ajustement et matérialise une surface de séparation (36) ; et **par le fait que** l'autre partie d'outillage (2) comprend un alésage cylindrique d'ajustement (32) conçu pour recevoir ledit tenon d'ajustement (30), et une face extrême qui ceinture ledit alésage d'ajustement (32) sur le bord de ce dernier, et matérialise l'autre surface de séparation (38).

10. Dispositif selon la revendication 9, **caractérisé par le fait que** les segments de contact (50) se trouvent sur la partie d'outillage (2) munie de l'alésage d'ajustement (32), les entailles radiales (52) étant ouvertes axialement vers la face extrême, radialement vers l'extérieur, et vers ledit alésage d'ajustement.

11. Dispositif selon la revendication 9 ou 10, **caractérisé par** un bec de coincement (40) logé à coulissement dans un perçage transversal du tenon d'ajustement (30), et muni d'un tronc de cône intérieur ou extérieur à ses extrémités ; et par deux organes de serrage qui sont, de préférence, réalisés comme des vis d'arrêt, sont diamétralement opposés l'un à l'autre vis-à-vis de l'alésage d'ajustement (32) et peuvent être verrouillés avec le bec de coincement (40) lors du processus de serrage, à la manière de coins, avec pression des parties d'outillage (1, 2) l'une contre l'autre dans la région des surfaces de séparation (36, 38).

12. Dispositif selon la revendication 11, **caractérisé par le fait que** la surface de séparation (38) de la partie d'outillage (2) munie de l'alésage d'ajustement (32) est subdivisée en les segments de contact (50) à l'extérieur des parties périphériques (60) comportant les organes de serrage ; est fermée dans lesdites parties périphériques (60) comportant les organes de serrage ; et est axialement en retrait vis-à-vis desdits segments de contact (50).

13. Dispositif d'accouplement dissociable de deux parties d'outillage (1, 2) orientées coaxialement à l'intérieur d'un outil tournant et pouvant être pressées axialement l'une contre l'autre, au moyen d'un dispositif de serrage, sur des surfaces de séparation (36, 38) tournées l'une vers l'autre, **caractérisé par le fait que** lesdites parties d'outillage (1, 2) peuvent être pressées l'une contre l'autre, par leurs surfaces de séparation (36, 38), en enserrant entre elles une structure matérielle annulaire d'entretoisement (70) douée de rigidité axiale et cédant à la torsion.

14. Dispositif selon la revendication 13, **caractérisé par le fait que** la structure matérielle d'entretoisement (70) est fermée à l'une (72) de ses faces extrêmes et est scindée, à son autre face extrême (74), en plusieurs segments de contact (50') cédant à la torsion, doués de rigidité axiale et espacés les uns des autres dans la direction périphérique.

15. Dispositif selon la revendication 13, **caractérisé par le fait que** la structure matérielle d'entretoisement (70) présente deux parties annulaires fermées (76, 78) qui délimitent les faces extrêmes (72, 74) et sont reliées l'une à l'autre, avec rigidité axiale et souplesse à la torsion, par une multiplicité de membrures axiales (80) radialement ininterrompues et distantes les unes des autres dans la direction périphérique.

16. Dispositif selon la revendication 15, **caractérisé par le fait que** les espaces interstitiels (82) entre les membrures forment un orifice de section transversale rectangulaire, trapézoïdale, circulaire ou ovale.

17. Dispositif selon la revendication 13, **caractérisé par le fait que** la structure matérielle d'entretoisement (70) est scindée, à ses deux faces extrêmes (72, 74), en plusieurs segments de contact (50) cédant à la torsion, doués de rigidité axiale, espacés les uns des autres dans la direction périphérique et imbriqués les uns dans les autres, à partir des deux faces extrêmes, à la manière de méandres ou en zigzag.

18. Dispositif selon la revendication 16 ou 17, **caractérisé par le fait que** les membrures axiales (80) sont reliées les unes aux autres par un moyen de liaison préférentiellement élastomère.

19. Dispositif selon la revendication 13, **caractérisé par le fait que** la structure matérielle d'entretoisement (70) présente une multiplicité de membrures axiales radialement ininterrompues, douées de rigidité axiale, espacées les unes des autres dans la direction périphérique et reliées les unes aux autres, avec souplesse à la torsion, par un moyen de liaison préférentiellement élastomère.

20. Dispositif selon l'une des revendications 13 à 19, **caractérisé par le fait que** la structure matérielle d'entretoisement (70) est reliée matériellement à l'une des parties d'outillage (1, 2) dans la région de l'une des surfaces de séparation.

21. Dispositif selon l'une des revendications 1 à 20, **caractérisé par le fait que** les parties d'outillage (1, 2) sont pourvues d'une couche réduisant le frottement, en particulier dans la région de leurs surfaces de séparation.
